(19) 
**Europäisches Patentamt**
**European Patent Office**
**Office européen des brevets**

(11) **EP 2 323 201 A1**

(12) # EUROPEAN PATENT APPLICATION
published in accordance with Art. 153(4) EPC

(43) Date of publication:
**18.05.2011 Bulletin 2011/20**

(21) Application number: **09812825.9**

(22) Date of filing: **15.07.2009**

(51) Int Cl.:
*H01M 4/02* (2006.01)       *H01M 4/62* (2006.01)
*H01M 4/66* (2006.01)

(86) International application number:
**PCT/JP2009/003341**

(87) International publication number:
**WO 2010/029676 (18.03.2010 Gazette 2010/11)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **09.09.2008 JP 2008231379**

(71) Applicant: **Panasonic Corporation**
**Kadoma-shi**
**Osaka 571-8501 (JP)**

(72) Inventors:
• **MURAOKA, Yoshiyuki**
  **1-61 Shiromi 2-chome,**
  **Chuo-ku,**
  **Osaka-shi**
  **Osaka 540-6207 (JP)**

• **TANAKA, Miho**
  **1-61 Shiromi 2-chome,**
  **Chuo-ku,**
  **Osaka-shi**
  **Osaka 540-6207 (JP)**
• **KUBOTA, Kazunori**
  **1-61 Shiromi 2-chome,**
  **Chuo-ku,**
  **Osaka-shi**
  **Osaka 540-6207 (JP)**

(74) Representative: **Grünecker, Kinkeldey, Stockmair & Schwanhäusser**
**Anwaltssozietät**
**Leopoldstrasse 4**
**80802 München (DE)**

(54) **NONAQUEOUS ELECTROLYTE SECONDARY BATTERY AND METHOD FOR MANUFACTURING THE SAME**

(57)    A nonaqueous electrolyte secondary battery includes: a positive electrode 4 including a positive electrode current collector and a positive electrode material mixture layer containing a positive electrode active material and a binder and provided on the positive electrode current collector; a negative electrode 5; a porous insulating layer 6 interposed between the positive electrode 4 and the negative electrode 5; and a nonaqueous electrolyte. The positive electrode 4 has a tensile extension percentage of 3.0% or more. The binder is made of copolymer containing vinylidene fluoride and hexafluoropropylene.

FIG. 1

EP 2 323 201 A1

## Description

TECHNICAL FIELD

The present disclosure relates to nonaqueous electrolyte secondary batteries and methods for fabricating the batteries, and particularly relates to a nonaqueous electrolyte secondary battery capable of reducing occurrence of short-circuit caused by crush and a method for fabricating such a battery.

BACKGROUND ART

To meet recent demands for use on vehicles in consideration of environmental issues or for employing DC power supplies for large tools, small and lightweight secondary batteries capable of performing rapid charge and large-current discharge have been required. Examples of typical secondary batteries satisfying such demands include a nonaqueous electrolyte secondary battery employing, as a negative electrode material, an active material such as lithium metal or a lithium alloy or a lithium intercalation compound in which lithium ions are intercalated in carbon serving as a host substance (which is a substance capable of intercalating or deintercalating lithium ions here), and also employing, as an electrolyte, an aprotic organic solvent in which lithium salt such as $LiClO_4$ or $LiPF_6$ is dissolved.

This nonaqueous electrolyte secondary battery generally includes: a negative electrode in which the negative electrode material described above is supported on a negative electrode current collector; a positive electrode in which a positive electrode active material, e.g., lithium cobalt composite oxide, electrochemically reacting with lithium ions reversibly is supported on a positive electrode current collector; and a porous insulating layer carrying an electrolyte thereon and interposed between the negative electrode and the positive electrode to prevent short-circuit from occurring between the negative electrode and the positive electrode.

The positive and negative electrodes formed in the form of sheet or foil are stacked, or wound in a spiral, with the porous insulating layer interposed therebetween to form a power generating element. This power generating element is placed in a battery case made of metal such as stainless steel, iron plated with nickel, or aluminium. Thereafter, the electrolyte is poured in the battery case, and then a lid is fixed to the opening end of the battery case to seal the battery case. In this manner, a nonaqueous electrolyte secondary battery is fabricated.

CITATION LIST

PATENT DOCUMENT

Patent Document 1: Japanese Patent Publication No. H05-182692

SUMMARY OF THE INVENTION

TECHNICAL PROBLEM

In general, occurrence of short-circuit in a nonaqueous electrolyte secondary battery (which may be hereinafter simply referred to as a "battery") causes large current to flow in the battery, resulting in a temperature rise in the battery. A rapid temperature rise in the battery might cause excessive heating in the battery. To prevent this, improvement in the safety of the nonaqueous electrolyte secondary battery is required. In particular, for large-size and high-power nonaqueous electrolyte secondary batteries, excessive heating is highly likely to occur and, therefore, safety improvement is strongly required.

Short-circuit in the nonaqueous electrolyte secondary battery occurs for some reasons including destruction of the battery by, for example, crush and entering of a foreign material in the battery. Among them, short-circuit caused by crushing of the battery in a fully-charged state produces high energy in the shortest instant, resulting in that excessive heating is most likely to occur. In practice, battery destruction might occur in some applications, and thus, the presence of short-circuit caused by battery crush is an important factor for safety evaluation.

In view of this, inventors of this disclosure intensively studied what causes short-circuit in a nonaqueous electrolyte secondary battery when the battery is destroyed by crush, to obtain the following finding.

In a situation where a nonaqueous electrolyte secondary battery is crushed to be deformed, each of a positive electrode, a negative electrode, and a porous insulating layer forming an electrode group is subjected to tensile stress, and extends according to the deformation of a battery case. When the battery is crushed to a predetermined depth, the positive electrode having the lowest tensile extension percentage among the positive and negative electrodes and the porous insulating layer is broken first. Then, the broken portion of the positive electrode penetrates the porous insulating layer, resulting in that the positive electrode and the negative electrode are short-circuited. In other words, short-circuit occurs in the nonaqueous electrolyte secondary battery.

Based on the foregoing finding, the inventors concluded that it is necessary for reduction of short-circuit caused by crush of the battery to reduce first breakage of the positive electrode and that an increase in tensile extension percentage of the positive electrode is an important factor for the reduction of the first breakage.

In view of this, the inventors further intensively studied for means for increasing the tensile extension percentage of the positive electrode, to find that heat treatment performed on the positive electrode at a predetermined temperature for a predetermined period after rolling can increase the tensile extension percentage of the positive electrode.

For the heat treatment, disclosed is a technique of, for example, performing heat treatment on a positive electrode or a negative electrode at a temperature higher than the recrystallizing temperature of a binder and lower than the decomposition temperature of the binder before the positive and negative electrodes are stacked or wound with a porous insulating layer interposed therebetween, for the purpose of reducing peeling of an electrode material from a current collector during the stacking or winding of the electrodes or reducing a decrease in adhesiveness of the electrode material to the current collector (see, Patent Document 1, for example).

In this technique, in the case of a nonaqueous electrolyte secondary battery employing a current collector made of, for example, aluminium having high purity as a positive electrode current collector and employing a binder made of polyvinylidine difluoride (PVDF) 7200 (i.e., copolymer containing only VDF and having a polymerization degree of 630,000, i.e., less than 750,000) (hereinafter referred to as a reference battery), the positive electrode is subjected to heat treatment at a high temperature for a long period after rolling. Then, although the tensile extension percentage of the positive electrode can be increased, a new problem, i.e., a decrease in the capacity of the nonaqueous electrolyte secondary battery, arises.

It is, therefore, an object of the present disclosure to reduce occurrence of short-circuit in the battery even upon destruction of a nonaqueous electrolyte secondary battery by crush by increasing the tensile extension percentage of a positive electrode, while minimizing a decrease in the capacity of the battery.

SOLUTION TO THE PROBLEM

To achieve the object, a nonaqueous electrolyte secondary battery in a first aspect of the present disclosure includes: a positive electrode including a positive electrode current collector and a positive electrode material mixture layer containing a positive electrode active material and a binder and provided on the positive electrode current collector; a negative electrode; a porous insulating layer interposed between the positive electrode and the negative electrode; and a nonaqueous electrolyte, wherein the positive electrode has a tensile extension percentage of 3.0% or more, the binder is made of copolymer containing vinylidene fluoride and hexafluoropropylene.

In the nonaqueous electrolyte secondary battery of the first aspect, the tensile extension percentage of the positive electrode is increased to 3.0% or more. Accordingly, even when the battery is destroyed by crush, and the positive electrode is not broken first, thus reducing occurrence of short-circuit in the battery. As a result, the safety of the battery can be enhanced.

In addition, the binder made of copolymer (i.e., VDF-HFP copolymer) containing vinylidene fluoride (VDF) and hexafluoropropylene (HFP) is employed. Accordingly, since VDF-HFP copolymer easily swells in a nonaqueous solvent contained in a nonaqueous electrolyte and has a high ion permeability, even when the binder melts and covers the positive electrode active material in heat treatment, reaction between the positive electrode active material and an electrolyte is not easily hindered, and thus, an increase in reaction resistance between the positive electrode active material and the electrolyte can be reduced, thereby minimizing a decrease in the battery capacity. As a result, a battery with excellent discharge performance can be provided.

In the nonaqueous electrolyte secondary battery of the first aspect, the binder is preferably made of copolymer containing vinylidene fluoride, hexafluoropropylene, and tetrafluoroethylene.

Then, since copolymer (i.e., VDF-HFP-TFE copolymer) containing vinylidene fluoride (VDF), hexafluoropropylene (HFP), and tetrafluoroethylene (TFE) more easily swells in a nonaqueous solvent and has a higher ion permeability than VDF-HFP copolymer, the battery employing the binder made of VDF-HFP-TFE copolymer can further reduce a decrease in the battery capacity, as compared to the battery employing the binder made of VDF-HFP copolymer.

To achieve the object, a nonaqueous electrolyte secondary battery in a second aspect of the present disclosure includes: a positive electrode including a positive electrode current collector and a positive electrode material mixture layer containing a positive electrode active material and a binder and provided on the positive electrode current collector; a negative electrode; a porous insulating layer interposed between the positive electrode and the negative electrode; and a nonaqueous electrolyte, wherein the positive electrode has a tensile extension percentage of 3.0% or more, the binder is made of copolymer containing vinylidene fluoride, and the binder has a polymerization degree of 750,000 or more.

In the nonaqueous electrolyte secondary battery of the second aspect, the tensile extension percentage of the positive electrode is increased to 3% or more. Accordingly, even when the battery is destroyed by crush, the positive electrode is not broken first, thus reducing occurrence of short-circuit in the battery. As a result, the safety of the battery can be enhanced.

In addition, a binder made of copolymer containing vinylidene fluoride (VDF) having a polymerization degree of 750,000 or more, i.e., PVDF having a polymerization degree of 750,000 or more, is employed. Ac cordingly, since PVDF having a polymerization degree of 750,000 or more has a high melting viscosity, even when the binder melts in heat treatment, the melted binder does not easily cover the positive electrode active material, and thus, the area of the positive electrode active material covered with the melted binder can be minimized, thereby minimizing a decrease in the battery capacity. As a result, a battery with excellent discharge performance can be provided.

Further, the binder made of PVDF having a polymerization degree of 750,000 or more is employed. Since PVDF having a polymerization degree of 750,000 or more has a high binding strength and a high viscosity, the amount of the binder contained in the positive electrode can be reduced. Accordingly, the amount of the binder melted in heat treatment can be reduced, and thus, the area of the positive electrode active material with the melted binder can be reduced, thereby reducing a decrease in the battery capacity. As a result, a battery with more excellent discharge performance can be provided.

In the nonaqueous electrolyte secondary battery of the first or second aspect, the tensile extension percentage of the positive electrode is preferably calculated from a length of a sample positive electrode formed by using the positive electrode and having a width of 15 mm and a length of 20 mm immediately before the sample positive electrode is broken with one end of the sample positive electrode fixed and the other end of the sample positive electrode extended along a longitudinal direction thereof at a speed of 20 mm/min, and from a length of the sample positive electrode before the sample positive electrode is extended.

In the nonaqueous electrolyte secondary battery of the first or second aspect, the positive electrode current collector has a dynamic hardness of 70 or less, and the positive electrode material mixture layer has a dynamic hardness of 5 or less.

Then, even with entering of a foreign material in the electrode group, the positive electrode can be deformed according to the shape of the foreign material to reduce penetration of the foreign material into the separator, thereby reducing occurrence of short-circuit in the battery. As a result, the safety of the battery can be further enhanced.

Preferably, in the nonaqueous electrolyte secondary battery of the first or second aspect, measurement of stress on a sample positive electrode whose circumferential surface is being pressed at 10 mm/min shows that no inflection point of stress arises until a gap corresponding to the sample positive electrode crushed by the pressing reaches 3 mm, inclusive, and the sample positive electrode is formed by using the positive electrode, has a circumference of 100 mm, and is rolled up in the shape of a single complete circle.

With this structure, even when the positive electrode is made thick, breakage of the positive electrode in forming the electrode group can be reduced, thereby providing the battery with high productivity. In other words, the positive electrode can be made thick to increase the battery capacity without breakage of the positive electrode in forming the electrode group.

In the nonaqueous electrolyte secondary battery of the first or second aspect, the positive electrode current collector is preferably made of aluminium containing iron.

With this structure, the temperature and/or period of the heat treatment can be reduced. Accordingly, the amount of the binder melted in the heat treatment can be reduced, and thus, the area of the positive electrode active material covered with the melted binder can be reduced, thereby reducing a decrease in the battery capacity. As a result, a battery with more excellent discharge performance can be provided.

In the nonaqueous electrolyte secondary battery of the first or second aspect, an amount of iron contained in the positive electrode current collector is in the range from 1.20 weight percent (wt. %) to 1.70 wt. %, both inclusive.

Preferably, in the nonaqueous electrolyte secondary battery of the first or second aspect, the negative electrode has a tensile extension percentage of 3.0% or more, and the porous insulating layer has a tensile extension percentage of 3.0% or more.

To achieve the object described above, a method in a first aspect of the present disclosure is a method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte, and includes the steps of: (a) preparing the positive electrode; (b) preparing the negative electrode; and (c) either winding or stacking the positive electrode and the negative electrode with the porous insulating layer interposed therebetween after steps (a) and (b), wherein step (a) includes the steps of (a1) coating the positive electrode current collector with positive electrode material mixture slurry containing the positive electrode active material and the binder, and drying the slurry, (a2) rolling the positive electrode current collector coated with the dried positive electrode material mixture slurry, thereby forming the positive electrode having a predetermined thickness, and (a3) performing heat treatment on the positive electrode coated with the dried positive electrode material mixture slurry at a predetermined temperature after step (a2), the binder is made of copolymer containing vinylidene fluoride and hexafluoropropylene, and the predetermined temperature is higher than or equal to a softening temperature of the positive electrode current collector and lower than a decomposition temperature of the binder.

In the method of the first aspect, heat treatment is performed on the positive electrode at a temperature higher than or equal to the softening temperature of the positive electrode current collector after the rolling, thereby increasing the tensile extension percentage of the positive electrode to 3% or more. Accordingly, even when the battery is destroyed by crush, the positive electrode is not broken first, and thus, occurrence of short-circuit in the battery can be reduced. As a result, the safety of the battery can be enhanced.

In addition, the binder made of VDF-HFP copolymer is employed. Accordingly, since VDF-HFP copolymer easily swells in a nonaqueous solvent contained in a nonaqueous electrolyte and has a high ion permeability, even when the binder melts and covers the positive electrode active material in heat treatment, reaction between the positive electrode active material and the electrolyte is not easily hindered, and thus, an increase in reaction resistance between the positive electrode active material and the electrolyte can be reduced, thereby minimizing a decrease in the battery capacity. As a result, a battery with excellent discharge performance can be provided.

Moreover, the positive electrode current collector has a dynamic hardness of 70 or less and the positive electrode material mixture layer has a dynamic hardness of 5 or less, thereby reducing short-circuit caused by entering of a foreign material. In addition, the electrode group is formed by using the positive electrode for which the gap at which an inflection point of stress is observed in a stiffness test is 3 mm or less, thereby reducing breakage of the positive electrode in forming the electrode group.

In the method of the first aspect, the binder is preferably made of copolymer containing vinylidene fluoride, hexafluoropropylene, and tetrafluoroethylene.

Then, since VDF-HFP-TFE copolymer more easily swells in a nonaqueous solvent and has a higher ion permeability than VDF-HFP copolymer, the battery employing the binder made of VDF-HFP-TFE copolymer can further reduce a decrease in the battery capacity, as compared to the battery employing the binder made of VDF-HFP copolymer.

To achieve the object described above, a method in a second aspect of the present disclosure is a method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte, and includes the steps of: (a) preparing the positive electrode; (b) preparing the negative electrode; and (c) either winding or stacking the positive electrode and the negative electrode with the porous insulating layer interposed therebetween after steps (a) and (b), wherein step (a) includes the steps of (a1) coating the positive electrode current collector with positive electrode material mixture slurry containing the positive electrode active material and the binder, and drying the slurry, (a2) rolling the positive electrode current collector coated with the dried positive electrode material mixture slurry, thereby forming the positive electrode having a predetermined thickness, and (a3) performing heat treatment on the positive electrode coated with the dried positive electrode material mixture slurry at a predetermined temperature after step (a2), the binder is made of copolymer containing vinylidene fluoride, the binder has a polymerization degree of 750,000 or more, and the predetermined temperature is higher than or equal to a softening temperature of the positive electrode current collector and lower than a decomposition temperature of the binder.

In the method of the second aspect, heat treatment is performed on the positive electrode at a temperature higher than or equal to the softening temperature of the positive electrode current collector after the rolling, thereby increasing the tensile extension percentage of the positive electrode to 3% or more. Accordingly, even when the battery is destroyed by crush, the positive electrode is not broken first, and thus, occurrence of short-circuit in the battery can be reduced. As a result, the safety of the battery can be enhanced.

In addition, the binder made of PVDF having a polymerization degree of 750,000 or more is employed. Accordingly, since PVDF having a polymerization degree of 750,000 or more has a high melting viscosity, even when the binder melts in heat treatment, the melted binder does not easily cover the positive electrode active material, and thus, the area of the positive electrode active material covered with the melted binder can be reduced, thereby minimizing a decrease in the battery capacity. As a result, a battery with excellent discharge performance can be provided.

Further, the binder made of PVDF having a polymerization degree of 750,000 or more is employed. Since PVDF having a polymerization degree of 750,000 or more has a high binding strength and a high viscosity, the amount of the binder contained in the positive electrode can be reduced. Accordingly, the amount of the binder melted in heat treatment can be reduced, and thus, the area of the positive electrode active material with the melted binder can be reduced, thereby reducing a decrease in the battery capacity. As a result, a battery with more excellent discharge performance can be provided.

Moreover, the positive electrode current collector has a dynamic hardness of 70 or less, and the positive electrode material mixture layer has a dynamic hardness of 5 or less, thereby reducing short-circuit caused by entering of a foreign material. In addition, the electrode group is formed by using the positive electrode for which the gap at which an inflection point of stress is observed in a stiffness test is 3 mm or less, thereby reducing breakage of the positive electrode in forming the electrode group.

In the method of the first or second aspect, the positive electrode current collector is preferably made of aluminium containing iron.

With this method, the temperature and/or period of the heat treatment can be reduced. Accordingly, the amount of the binder melted in the heat treatment can be reduced, and thus, the area of the positive electrode active material covered with the melted binder can be reduced, thereby reducing a decrease in the battery capacity. As a result, a battery with more excellent discharge performance can be provided.

ADVANTAGES OF THE INVENTION

In a nonaqueous electrolyte secondary battery and a method for the nonaqueous electrolyte secondary battery according to the present disclosure, a binder made of VDF-HFP copolymer or VDF-HFP-TFE copolymer or a binder made of PVDF having a polymerization degree of 750,000 or more is employed. Accordingly, a decrease in the capacity of the nonaqueous electrolyte secondary battery can be minimized, and the tensile extension percentage of the positive electrode can be increased to 3% or more.

BRIEF DESCRIPTION OF THE DRAWINGS

[FIG. 1] FIG. 1 is a vertical cross-sectional view illustrating a structure of a nonaqueous electrolyte secondary battery according to a first embodiment of the present disclosure.

[FIG. 2] FIG. 2 is an enlarged cross-sectional view illustrating a structure of an electrode group.

[FIG. 3] FIGS. 3(a) through 3(c) are views schematically showing measurement of a tensile extension percentage.

[FIG. 4] FIGS. 4(a) and 4(b) are views schematically showing a stiffness test.

[FIG. 5] FIG. 5 is an enlarged cross-sectional view illustrating a structure of an electrode group.

[FIG. 6] FIGS. 6(a) and 6(b) are views showing a foreign material entering test.

DESCRIPTION OF EMBODIMENTS

Embodiments of the present disclosure will be described hereinafter with reference to the drawings. The present disclosure is not limited to the following embodiments.

(First Embodiment)

First, a study of inventors of the present disclosure on a new problem (i.e., a decrease in the battery capacity) arising in a reference battery (specifically, a nonaqueous electrolyte secondary battery employing a current collector made of high-purity aluminium as a positive electrode current collector and a binder made of PVDF7200, i.e., copolymer containing only VDF) shows that a binder melts and covers a positive electrode active material in heat treatment performed after rolling to inhibit reaction between the positive electrode active material and an electrolyte.

After a further intensive study, the inventors found that the use of a binder made of copolymer containing vinylidene fluoride (VDF) and hexafluoropropylene (HFP) (hereinafter referred to as "VDF-HFP copolymer") can reduce hindering of reaction between the positive electrode active material and the electrolyte even when the binder melts and covers the positive electrode active material in the heat treatment.

This is because VDF-HFP copolymer more easily swells in a nonaqueous solvent contained in a nonaqueous electrolyte, and having a higher ion permeability, than PVDF7200. Specifically, even when a binder made of VDF-HFP copolymer melts and covers a positive electrode active material in heat treatment, reaction between the positive electrode active material and the electrolyte is not easily hindered, and thus, an increase in reaction resistance between the positive electrode active material and the electrolyte can be reduced, thereby minimizing a decrease in the battery capacity.

It was also found that the use of a binder made of copolymer containing VDF, HFP, and tetrafluoroethylene (TFE) (hereinafter referred to as "VDF-HFP-TFE copolymer") can further reduce hindering of reaction between the positive electrode active material and the electrolyte even when the binder melts and covers the positive electrode active material in the heat treatment.

This is because VDF-HFP-TFE copolymer more easily swells in a nonaqueous solvent, and has a higher ion permeability, than VDF-HFP copolymer.

In addition, it was found that the use of a current collector made of iron-containing aluminium as a positive electrode current collector can sufficiently increase the tensile extension percentage of the positive electrode even with the heat treatment performed at a lower temperature and/or for a shorter period.

The increase in the tensile extension percentage of the positive electrode is because heat treatment performed on the positive electrode at a temperature higher than or equal to the softening temperature of the positive electrode current collector causes crystal forming the positive electrode current collector to grow and become coarse.

The reductions in the temperature and/or period of the heat treatment are considered to be achieved because (1) inclusion of iron in the positive electrode current collector reduces the softening temperature of the positive electrode current collector and (2) inclusion of iron in the positive electrode current collector accelerates the growth of crystal forming the positive electrode current collector.

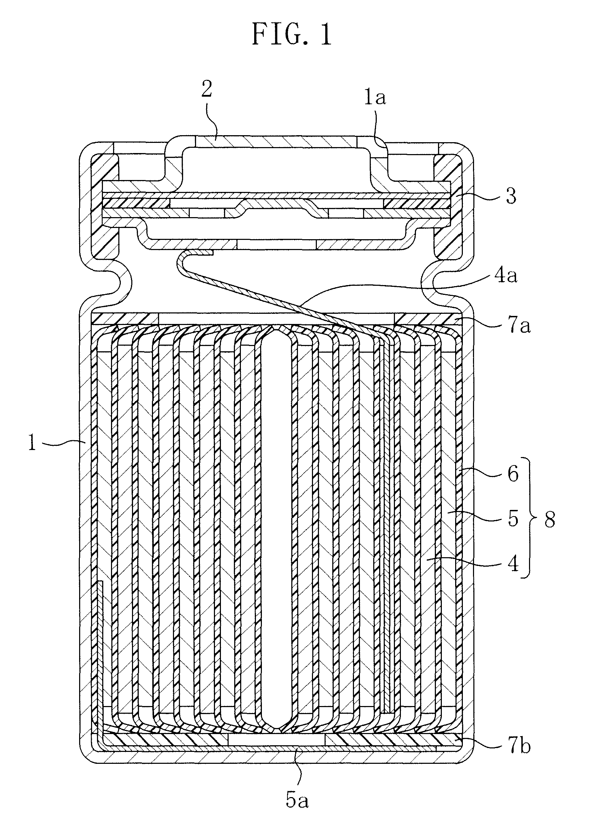

Hereinafter, a lithium ion secondary battery will be described as a specific example of a nonaqueous electrolyte secondary battery according to a first embodiment of the present disclosure. A structure of the battery is described with reference to FIG. 1. FIG. 1 is a vertical cross-sectional view illustrating a structure of the nonaqueous electrolyte secondary battery of the first embodiment.

As illustrated in FIG. 1, the nonaqueous electrolyte secondary battery of this embodiment includes a battery case 1 made of, for example, stainless steel and an electrode group 8 placed in the battery case 1.

An opening 1a is formed in the upper face of the battery case 1. A sealing plate 2 is crimped to the opening 1a with a gasket 3 interposed therebetween, thereby sealing the opening 1a.

The electrode group 8 includes a positive electrode 4, a negative electrode 5, and a porous insulating layer (separator) 6 made of, for example, polyethylene. The positive electrode 4 and the negative electrode 5 are wound in a spiral with the separator 6 interposed therebetween. An upper insulating plate 7a is placed on top of the electrode group 8. A lower insulating plate 7b is placed on the bottom of the electrode group 8.

One end of a positive electrode lead 4a made of aluminium is attached to the positive electrode 4. The other end of the positive electrode lead 4a is connected to the sealing plate 2 also serving as a positive electrode terminal. One end of a negative electrode lead 5a made of nickel is attached to the negative electrode 5. The other end of the negative electrode lead 5a is connected to the battery case 1 also serving as a negative electrode terminal.

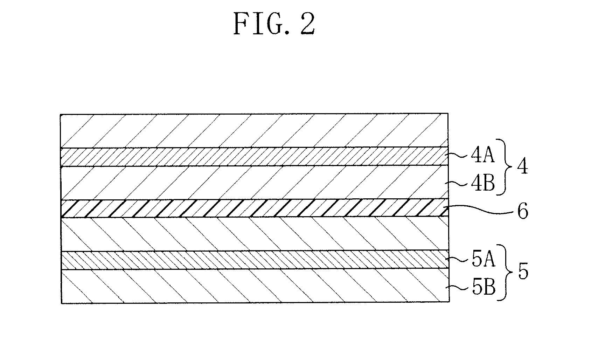

A structure of the electrode group 8 of the nonaqueous electrolyte secondary battery of the first embodiment will now be described with reference to FIG 2. FIG. 2 is an enlarged cross-sectional view illustrating the structure of the electrode group 8.

As illustrated in FIG. 2, the positive electrode 4 includes a positive electrode current collector 4A and a positive electrode material mixture layer 4B provided on the surface of the positive electrode current collector 4A. The positive electrode current collector 4A is preferably made of aluminium containing iron. In this case, the amount of iron contained in the positive electrode current collector 4A is preferably in the range from 1.20 weight percent (wt. %) to 1.70 wt. %, both inclusive. The positive electrode material mixture layer 4B contains a positive electrode active material, a binder made of VDF-HFP copolymer or VDF-HFP-TFE copolymer, and a conductive agent. The tensile extension percentage of the positive electrode 4 is 3% or more.

As illustrated in FIG. 2, the negative electrode 5 includes a negative electrode current collector 5A and a negative electrode material mixture layer 5B provided on the surface of the negative electrode current collector 5A. The negative electrode current collector 5A is a conductive member in the shape of a plate. The negative electrode material mixture layer 5B contains a negative electrode active material and a binder, for example. The tensile extension percentage of the negative electrode 5 is 3% or more.

As illustrated in FIG. 2, the separator 6 is interposed between the positive electrode 4 and the negative electrode 5. The tensile extension percentage of the separator 6 is 3% or more.

A method for fabricating a nonaqueous electrolyte secondary battery according to the first embodiment will be described hereinafter with reference to FIG. 1.

-Method for Forming Positive Electrode-

A positive electrode 4 is formed in the following manner. For example, first, a positive electrode active material, a binder made of VDF-HFP copolymer or VDF-HFP-TFE copolymer, and a conductive agent are mixed in a liquid component, thereby preparing positive electrode material mixture slurry. Then, this positive electrode material mixture slurry is applied onto the surface of a positive electrode current collector made of iron-containing aluminium, and is dried. Thereafter, the resultant positive electrode current collector is rolled, thereby forming a positive electrode having a predetermined thickness. Subsequently, the positive electrode is subjected to heat treatment at a predetermined temperature for a predetermined period. The predetermined temperature herein is higher than or equal to the softening temperature of the positive electrode current collector 4A and lower than the decomposition temperature of the binder. The heat treatment on the positive electrode is carried out by, for example, a method in which the heat treatment on the positive electrode is carried out by using hot air subjected to low humidity treatment.

Heat treatment performed to increase the tensile extension percentage of the positive electrode needs to be carried out after the rolling. If the heat treatment is carried out before the rolling, the tensile extension percentage of the positive electrode can be increased, but the tensile extension percentage of the positive electrode decreases in rolling performed after the heat treatment, resulting in that the tensile extension percentage of the positive electrode cannot be increased eventually.

To effectively increase the tensile extension percentage of the positive electrode, a positive electrode current collector having a relatively large thickness may be employed in forming the positive electrode. For example, in the case where a positive electrode current collector with a thickness of 15 $\mu$m is used in forming the positive electrode, the tensile extension percentage of the positive electrode can be easily increased to 3% or more, but it is relatively difficult to increase the tensile extension percentage of the positive electrode to 6% or more. On the other hand, in the case where a positive electrode current collector with a thickness of 30 $\mu$m is used in forming the positive electrode, the tensile extension percentage of the positive electrode can be increased to 13% or more.

- Method for Forming Negative Electrode-

A negative electrode 5 is formed in the following manner. For example, first, a negative electrode active material and a binder are mixed in a liquid component, thereby preparing negative electrode material mixture slurry. Then, this negative electrode material mixture slurry is applied onto the surface of a negative electrode current collector, and is dried. Thereafter, the resultant negative electrode current collector is rolled, thereby forming a negative electrode having a predetermined thickness. After the rolling, the negative electrode may be subjected to heat treatment at a predetermined temperature for a predetermined period.

<Method for Fabri cating Battery>

A battery is fabricated in the following manner. For example, as illustrated in FIG. 1, an aluminium positive electrode lead 4a is attached to a positive electrode current collector (see, 4A in FIG. 2), and a nickel negative electrode lead 5a is attached to a negative electrode current collector (see, 5A in FIG. 2). Then, a positive electrode 4 and a negative electrode 5 are wound with a separator 6 interposed therebetween, thereby forming an electrode group 8. Thereafter, an upper insulating plate 7a is placed on the upper end of the electrode group 8, and a lower insulating plate 7b is placed on the lower end of the electrode group 8. Subsequently, the negative electrode lead 5a is welded to a battery case 1, and the positive electrode lead 4a is welded to a sealing plate 2 including a safety valve configured to be operated with inner pressure, thereby housing the electrode group 8 in the battery case 1. Then, a nonaqueous electrolyte is poured in the battery case 1 under a reduced pressure. Lastly, an opening end of the battery case 1 is crimped to the sealing plate 2 with a gasket 3 interposed therebetween. In this manner, a battery is fabricated.

The positive electrode 4 of this embodiment employs a binder made of VDF-HFP copolymer or VDF-HFP-TFE copolymer and a current collector made of iron-containing aluminium as a positive electrode current collector, and is formed by performing, after rolling, heat treatment at a temperature higher than or equal to the softening temperature of the positive electrode current collector and lower than the decomposition temperature of the binder.

The positive electrode 4 of this embodiment has features (1), (2), and (3) as follows:

(1) The tensile extension percentage of the positive electrode 4 is 3% or more;
(2) The dynamic hardness of the positive electrode current collector 4A is 70 or less and the dynamic hardness of the positive electrode material mixture layer 4B is 5 or less; and
(3) A gap at which an inflection point of stress is observed in a stiffness test is 3 mm or less.

Measurement methods (A)-(C) for the respective features (1)-(3) will now be described.

(A) Measurement of Tensile Extension Percentage

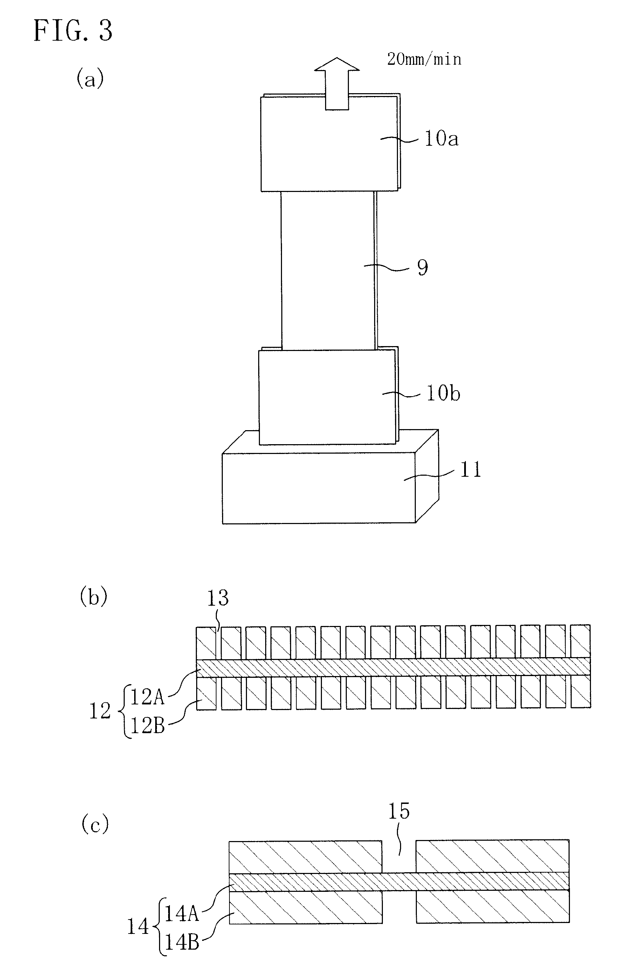

The "tensile extension percentage of a positive electrode" herein is measured as follows. First, a positive electrode is cut to have a width of 15 mm and an effective length (i.e., the length of an effective portion) of 20 mm, thereby forming a sample positive electrode 9 as illustrated in FIG. 3(a). Then, one end of the sample positive electrode 9 is placed on a lower chuck 10b supported by a base 11, whereas the other end of the sample positive electrode 9 is placed at an upper chuck 10a connected to a load mechanism (not shown) via a load cell (i.e., a load converter, not shown, for converting a load into an electrical signal), thereby holding the sample positive electrode 9. Subsequently, the upper chuck 10a is moved along the length of the sample positive electrode 9 at a speed of 20 mm/min to extend the sample positive electrode 9 (see, the arrow shown in FIG. 3(a)). At this time, the length of the sample positive electrode immediately before the sample positive electrode is broken is measured. Using the obtained length and the length (i.e., 20 mm) before the extension of the sample positive electrode 9, the tensile extension percentage of the positive electrode is calculated. The tensile load on the sample positive electrode 9 is detected from information obtained from the load cell.

The definition of the "tensile extension percentage of the positive electrode" will now be explained with reference to FIGS. 3(b) and 3(c). FIGS. 3(b) and 3(c) are cross-sectional views schematically illustrating the positive electrode in the measurement of the tensile extension percentage. Specifically, FIG. 3(b) shows the positive electrode of this disclosure (i.e., a positive electrode subjected to heat treatment after rolling and having a tensile extension percentage of 3% or more), and FIG. 3(c) shows a conventional positive electrode (i.e., a positive electrode having a tensile extension percentage less than 3%).

In measuring a positive electrode 12 according to this disclosure, a positive electrode current collector 12A extends first with fine cracks 13 occurring in an positive electrode material mixture layer 12B as illustrated in FIG. 3(b) before the positive electrode current collector 12A is finally broken. In this manner, in the positive electrode 12 of this disclosure, a first crack occurs in the positive electrode material mixture layer 12B and, for a short period after occurrence of the first crack, the positive electrode current collector 12A is not broken, and continues to extend with cracks occurring in the positive electrode material mixture layer 12B.

On the other hand, in measuring the tensile extension percentage of a conventional positive electrode 14, not a fine crack (see, 13 in FIG. 3b)) but a large crack 15 as shown in FIG. 3(c) occurs in a positive electrode material mixture layer 14B, resulting in that a positive electrode current collector 14A is broken simultaneously with occurrence of the crack 15 in the positive electrode material mixture layer 14B.

(B) Measurement of Dynamic Hardness

The "dynamic hardness" herein is measured in the following manner. An indenter is pressed into the positive electrode under a predetermined test pressure P (mN) so that the indent depth (the depth of penetration) D (μm) at this time can be measured. The obtained indent depth D is introduced to [Equation 1] below, thereby calculating a dynamic hardness DH. As the indenter, a Berkovich indenter (i.e., a three-sided pyramid indenter with a ridge angle of 115°) was used in this case.

$$DH = 3.8584 \times P/D^2 \qquad\qquad [\text{Equation 1}]$$

(C) Measurement of Gap in Stiffness Test

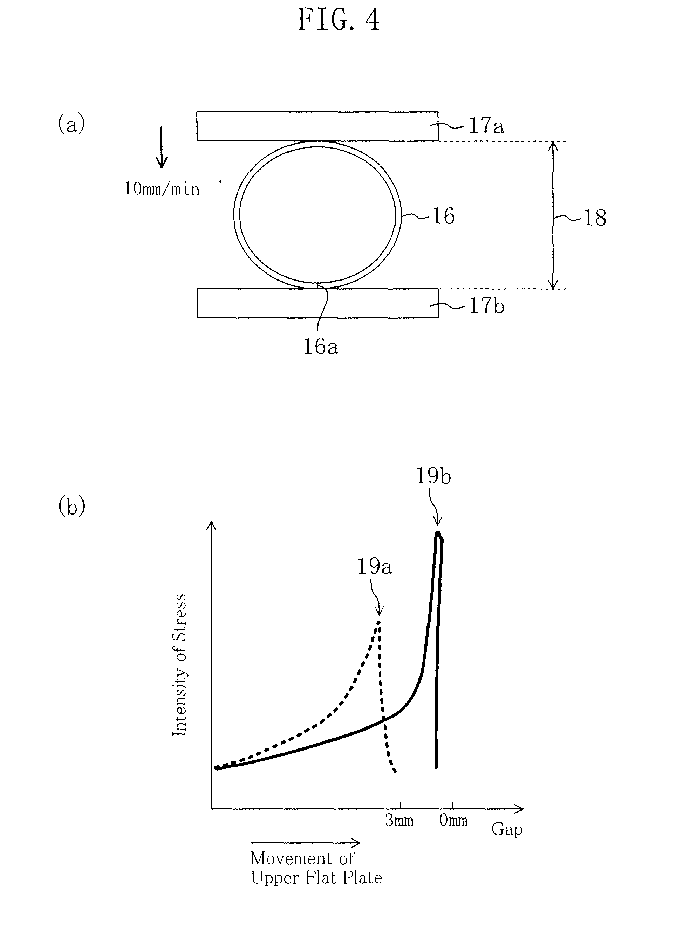

The "stiffness test" herein is a test in which the circumferential surface of a sample positive electrode having a circumference of 100 mm and rolled up in the shape of a single complete circle is pressed at a predetermined speed. Specifically, a positive electrode is cut to have a width of 10 mm and a length of 100 mm, and the resultant electrode is rolled up to form a single complete circle with both ends thereof placed on top of each other (see, an overlapping portion 16a in FIG. 4(a)), thereby completing a sample positive electrode 16 with a circumference of 100 mm. Then, as shown in FIG. 4(a), the overlapping portion 16a of the sample positive electrode 16 is fixed by a fixing jig (not shown) placed on a lower flat plate 17b, and the sample positive electrode 16 is sandwiched between an upper flat plate 17a and the lower flat plate 17b. Thereafter, the upper flat plate 17a is moved downward at a speed of 10 mm/min, thereby pressing the circumferential surface of the sample positive electrode 16. At this time, stress applied to the sample positive electrode 16 is measured, and the position of the downward-moved upper flat plate 17a at the time (see, points 19a and 19b in FIG. 4(b)) when an inflection point of this stress is observed (i.e., when the sample positive electrode 16 cannot be deformed any more, as the upper flat plate 17a is moved downward, to be broken) is checked, thereby measuring a gap (i.e., a gap corresponding to the sample positive electrode 16) 18 between the upper flat plate 17a and the lower flat plate 17b. In FIG. 4(b), the solid line schematically indicates the positive electrode of this disclosure, and the broken line schematically indicates a conventional positive electrode. The positive electrode of this disclosure (see, the solid line) can be deformed without breaking until the upper flat plate 17a is further moved downward, as compared to the conventional positive electrode (see, the broken line).

In this embodiment, the following advantages can be obtained.

In this embodiment, by performing heat treatment on the positive electrode at a temperature higher than or equal to the softening temperature of the positive electrode current collector after rolling, the tensile extension percentage of the positive electrode can be increased to 3% or more. Thus, even when the battery is destroyed by crush, the positive electrode is not broken first, and thus, occurrence of short-circuit in the battery can be reduced. Accordingly, the safety of the battery can be enhanced.

In addition, by employing a binder made of VDF-HFP copolymer, which easily swells in a nonaqueous solvent contained in a nonaqueous electrolyte and has a high ion permeability as described above, even when the binder melts and covers the positive electrode active material in the heat treatment, reaction between the positive electrode active material and the electrolyte is not easily hindered, and thus, a decrease in the battery capacity can be minimized, thereby providing a battery with excellent discharge performance. Further, by employing a binder made of VDF-HFP-TFE copolymer, which more easily swells in the nonaqueous solvent and has a higher ion permeability than VDF-HFP copolymer as described above, the battery using the binder made of VDF-HFP-TFE copolymer can further reduce a decrease in the battery capacity than the battery using the binder made of VDF-HFP copolymer.

Moreover, by employing a current collector made of iron-containing aluminium as a positive electrode current collector, even with reduction of the temperature and/or period of the heat treatment, the tensile extension percentage of the positive electrode can be increased to 3% or more, as described above. In general, the amount of a melted binder increases as the temperature of the heat treatment performed on the binder increases. In addition, the amount of a melted binder generally increases as the period of the heat treatment performed on the binder increases. Thus, reduction of the temperature and/or period of the heat treatment can reduce the amount of the binder melted in the heat treatment, and thus, reduce the area of the positive electrode active material covered with the melted binder, thereby reducing a decrease in the battery capacity. As a result, a battery with more excellent discharge performance can be provided.

Furthermore, the positive electrode current collector has a dynamic hardness of 70 or less, and the positive electrode material mixture layer has a dynamic hardness of 5 or less. Thus, even when a foreign material enters the electrode group, the positive electrode is deformed according to the shape of the foreign material, thereby reducing penetration of the foreign material into the separator. Accordingly, occurrence of short-circuit in the battery can be reduced, resulting in further enhancing the safety of the battery.

Moreover, the electrode group can be formed by using the positive electrode for which the gap at which an inflection point of stress is observed in a stiffness test is 3 mm or less. Thus, even when the positive electrode is made thick, breakage of the positive electrode in forming the electrode group can be reduced, thereby providing the battery with high productivity. In other words, the positive electrode can be made thick to increase the battery capacity without breakage of the positive electrode in forming the electrode group.

As described above, the positive electrode 4 of this embodiment employs a binder made of VDF-HFP copolymer or VDF-HFP-TFE copolymer and also employs a current collector made of iron-containing aluminium as the positive electrode current collector 4A. The positive electrode 4 is subjected to heat treatment at a temperature higher than or equal to the softening temperature of the positive electrode current collector 4A and lower than the decomposition temperature of the binder after rolling. The positive electrode 4 of this embodiment has features (1), (2), and (3) described above. Accordingly, the nonaqueous electrolyte secondary battery of this embodiment can reduce short-circuit caused by crush while minimizing a decrease in the battery capacity, can reduce short-circuit caused by entering of a foreign material, and can reduce breakage of the positive electrode in forming the electrode group.

To obtain the advantage of reduction of short-circuit caused by crush, the tensile extension percentages of the negative electrode 5 and the separator 6 in this embodiment also need to be 3% or more. Specifically, first, for example, even if the tensile extension percentages of the positive electrode and the separator are 3% or more, a negative electrode having a tensile extension percentage less than 3% is broken first upon destruction of the battery by crush, and thus, short-circuit occurs in the battery. Second, for example, even if the tensile extension percentages of the positive electrode and the negative electrode are 3% or more, a separator having a tensile extension percentage less than 3% is broken first upon destruction of the battery by crush, and thus, short-circuit occurs in the battery.

In general, separators have tensile extension percentages of 3% or more, whereas most of the negative electrodes have tensile extension percentages of 3% or more, but tensile extension percentages of some of the negative electrodes are lower than 3%. In this embodiment, of course, a negative electrode having a tensile extension percentage of 3% or more is employed. Alternatively, to ensure that the tensile extension percentage of the negative electrode is 3% or more, in forming a negative electrode, the negative electrode may be subjected to heat treatment at a predetermined temperature for a predetermined period after rolling, for example. This process ensures that the tensile extension percentage of the negative electrode is 3% or more.

In this embodiment, the case where heat treatment is performed on the positive electrode using hot air subjected to low humidity treatment is described as a specific example. However, the present disclosure is not limited to this embodiment. Alternatively, for example, the heat treatment may be performed on the positive electrode by bringing a heated roll and the positive electrode into contact with each other. In this case, the heat supply rate to the positive electrode is higher than that in heat treatment using hot air, and thus, short-period heat treatment can increase the tensile extension percentage of the positive electrode to 3% or more. In addition, in this embodiment, the case of using a current collector made of iron-containing aluminium as a positive electrode current collector is described. Current collectors made of iron-containing aluminium are generally classified into positive electrode current collectors containing a relatively small amount of iron (e.g., aluminium alloy foil, BESPA FS13 (A8021H-H18) produced by SUMIKEI ALUMINUM FOIL, Co., Ltd.) and positive electrode current collectors containing a relatively large amount of iron (e.g., aluminium alloy foil, BESPA FS115 (A8021H-H18) produced by SUMIKEI ALUMINUM FOIL, Co., Ltd.). For example, in the case of using a positive electrode current collector containing a relatively large amount of iron as a positive electrode current collector, the softening temperature is lower than that of a positive electrode current collector containing a relatively small amount of iron, and thus, heat treatment performed at a low temperature and/or for a short period can increase the tensile extension percentage of the positive electrode to 3% or more. Specifically, for example, if a binder made of VDF-HFP copolymer or VDF-HFP-TFE copolymer as in this embodiment and a positive electrode current collector containing a relatively large amount of iron are used and the positive electrode is brought into contact with a heated roll at 180°C for 10 seconds, the tensile extension percentage of the positive electrode can be increased to 3% or more.

In addition, in this embodiment, the case of using a current collector made of iron-containing aluminium as a positive electrode current collector in order to further reduce a decrease in the battery capacity is described as a specific example. However, the present disclosure is not limited to this case. Alternatively, a current collector made of high-purity aluminium may be used as a positive electrode current collector, for example.

This embodiment is not limited to a cylindrical battery as illustrated in FIG. 1, and a rectangular battery or a high-power battery may be employed. In addition, the embodiment is not limited to the electrode group 8 in which the positive electrode 4 and the negative electrode 5 are wound with the separator 6 interposed therebetween as illustrated in FIG. 1. Alternatively, an electrode group in which a positive electrode and a negative electrode are stacked with a separator interposed therebetween may be employed.

(Second Embodiment)

First, a study of inventors of the present disclosure on a new problem (i.e., a decrease in the battery capacity) arising in a reference battery (specifically, a nonaqueous electrolyte secondary battery employing a current collector made of high-purity aluminium as a positive electrode current collector and a binder made of PVDF7200, i.e., copolymer containing only VDF and having a polymerization degree of 630,000) shows that a binder melts and covers a positive electrode active material in heat treatment performed after rolling to inhibit reaction between the positive electrode active material and an electrolyte as described above.

After a further intensive study, the inventors found that the use of a binder made of PVDF7300, i.e., copolymer containing only VDF and having a polymerization degree of one million, can reduce covering of the positive electrode active material with the binder even when the binder melts in the heat treatment.

This is because PVDF7300 has a higher melting viscosity than that of PVDF7200. The "melting viscosity" herein is a viscosity in a melting state. Specifically, even when a binder made of PVDF7300 melts in heat treatment, the melted binder does not easily cover the positive electrode active material, and thus, the area of the positive electrode active material covered with the melted binder can be minimized, thereby minimizing a decrease in the battery capacity.

In addition, it was found that the use of the binder made of PVDF7300 can reduce the amount of the binder included in the positive electrode to reduce the area of the positive electrode active material covered with the melted binder, and thus, a decrease in the battery capacity can be reduced.

The reduction of the amount of the binder included in the positive electrode is achieved because (1) PVDF7300 has a higher binding strength than that of PVDF7200, and thus, the positive electrode material mixture layer can be bound to the positive electrode current collector even with a reduction in the amount of the binder included in the positive electrode and (2) PVDF7300 has a higher viscosity than that of PVDF7200, and thus, positive electrode material mixture slurry can be applied onto the positive electrode current collector without sedimentation even with a decrease in the amount of the binder included in the positive electrode.

In addition, as described above, it was also found that the use of the current collector made of iron-containing aluminium as a positive electrode current collector can sufficiently increase the tensile extension percentage of the positive electrode even with a reduction in the temperature and/or period of the heat treatment.

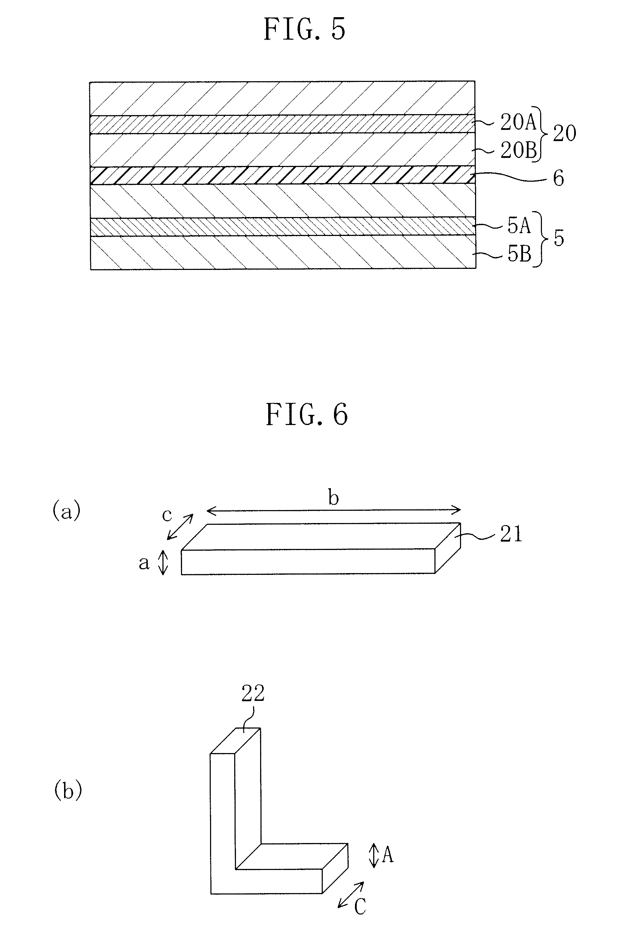

A structure of an electrode group forming a nonaqueous electrolyte secondary battery according to a second embodiment of the present disclosure will be described hereinafter with reference to FIG. 5. FIG. 5 is an enlarged cross-sectional view illustrating the structure of the electrode group. In FIG. 5, each member already described in the first embodiment is identified by the same reference character as in FIG. 2. Thus, in this embodiment, aspects different from those in the first embodiment will be mainly described, and the same aspects will not be repeated.

The second embodiment differs from the first embodiment in the following aspects.

As illustrated in FIG. 2, in the first embodiment, the positive electrode 4 includes the positive electrode current collector 4A made of iron-containing aluminium and the positive electrode material mixture layer 4B. The binder included in the positive electrode material mixture layer 4B is made of VDF-HFP copolymer or VDF-HFP-TFE copolymer. On the other hand, as illustrated in FIG. 5, in this embodiment, a positive electrode 20 includes a positive electrode current collector 20A made of iron-containing aluminium and a positive electrode material mixture layer 20B. A binder included in the positive electrode material mixture layer 20B is made of PVDF7300. In this manner, the difference between the first embodiment and the second embodiment is binders.

A method for fabricating a nonaqueous electrolyte secondary battery according to the second embodiment will be briefly described hereinafter.

-Method for Forming Positive Electrode-

A positive electrode according to this embodiment is formed in the same manner as in -Method for Forming Positive Electrode- of the first embodiment except that the binder made of VDF-HFP copolymer or VDF-HFP-TFE copolymer in -Method for Forming Positive Electrode- of the first embodiment is replaced by a binder made of PVDF7300.

-Method for Forming Negative Electrode-

A negative electrode according to this embodiment is formed in the same manner as in -Method for Forming Negative Electrode- of the first embodiment.

<Method for Fabri cating Battery>

A battery according to this embodiment is fabricated in the same manner as in

<Method for Fabricating Battery> of the first embodiment.

The positive electrode 20 of this embodiment employs a binder made of PVDF7300 and also employs a current collector made of iron-containing aluminium as a positive electrode current collector. The positive electrode is subjected to heat treatment at a temperature higher than or equal to the softening temperature of the positive electrode current collector and lower than the decomposition temperature of the binder after rolling.

As the positive electrode 4 of the first embodiment does, the positive electrode 20 of this embodiment described above has features (1), (2), and (3) as follows:

(1) The tensile extension percentage of the positive electrode 20 is 3% or more;
(2) The dynamic hardness of the positive electrode current collector 20A is 70 or less and the dynamic hardness of the positive electrode material mixture layer 20B is 5 or less; and
(3) A gap at which an inflection point of stress is observed in a stiffness test is 3 mm or less.

In this embodiment, the following advantages can be obtained.

In this embodiment, by performing heat treatment on the positive electrode at a temperature higher than or equal to the softening temperature of the positive electrode current collector after rolling, the tensile extension percentage of the positive electrode can be increased to 3% or more. Thus, even when the battery is destroyed by crush, the positive electrode is not broken first, and thus, occurrence of short-circuit in the battery can be reduced. Accordingly, the safety of the battery can be enhanced.

In addition, by employing the binder made of PVDF7300, which has a high melting viscosity as described above, even when the binder melts in heat treatment, the melted binder does not easily cover the positive electrode active material, and thus, the area of the positive electrode active material covered with the melted binder can be minimized, thereby minimizing a decrease in the battery capacity. As a result, a battery with excellent discharge performance can be provided.

Further, by employing the binder made of PVDF7300, which has a high binding strength and a high viscosity as described above, the amount of the binder included in the positive electrode can be reduced. Accordingly, the amount of the binder melted in the heat treatment can be reduced, and thus, the area of the positive electrode active material covered with the melted binder can be reduced, thereby reducing a decrease in the battery capacity. As a result, a battery with more excellent discharge performance can be provided.

Moreover, by employing a current collector made of iron-containing aluminium as a positive electrode current collector, the temperature and/or period of the heat treatment can be reduced as described above. Accordingly, the amount of the binder melted in the heat treatment can be reduced, and thus, the area of the positive electrode active material covered with the melted binder can be reduced, thereby reducing a decrease in the battery capacity. As a result, a battery with much more excellent discharge performance can be provided.

Furthermore, the positive electrode current collector has a dynamic hardness of 70 or less and the positive electrode material mixture layer has a dynamic hardness of 5 or less. Thus, even when a foreign material enters an electrode group, the positive electrode is deformed according to the shape of the foreign material, thereby reducing penetration of the foreign material into the separator. Accordingly, occurrence of short-circuit in the battery can be reduced, resulting in further enhancing the safety of the battery.

Moreover, the electrode group can be formed by using the positive electrode for which the gap at which an inflection point of stress is observed in a stiffness test is 3 mm or less. Thus, even when the positive electrode is made thick, breakage of the positive electrode in forming the electrode group can be reduced, thereby providing the battery with high productivity. In other words, the positive electrode can be made thick to increase the battery capacity without breakage of the positive electrode in forming the electrode group.

As described above, the positive electrode 20 of this embodiment employs a binder made of PVDF7300 and also employs a current collector made of iron-containing aluminium as the positive electrode current collector 20A. The positive electrode is subjected to heat treatment at a temperature higher than or equal to the softening temperature of the positive electrode current collector 20A and lower than the decomposition temperature of the binder after rolling. The positive electrode 20 of this embodiment has features (1), (2), and (3) described above. Accordingly, the nonaqueous electrolyte secondary battery of this embodiment can reduce short-circuit caused by crush while minimizing a decrease in the battery capacity, can reduce short-circuit caused by entering of a foreign material, and can reduce breakage of the positive electrode in forming the electrode group.

In this embodiment, the case where heat treatment is performed on the positive electrode using hot air subjected to low humidity treatment and employing the current collector made of iron-containing aluminium (generally classified into a positive electrode current collector containing a relatively small amount of iron and a positive electrode current collector containing a relatively large amount of iron, as described above) as a positive electrode current collector is described as a specific example. However, the present disclosure is not limited to this embodiment. Alternatively, for example, the heat treatment may be performed on the positive electrode by bringing a heated roll and the positive electrode into contact with each other and using a positive electrode current collector containing a relatively large amount of iron as a positive electrode current collector. In this case, the use of the positive electrode current collector containing a relatively large amount of iron can reduce the softening temperature and reduce the temperature and/or period of the heat treatment. In addition, by employing a method in which the heated roll and the positive electrode are brought into contact with each other as a heat treatment method, the heat supply rate to the positive electrode can be increased, thereby reducing the period of the heat treatment.

Further, in this embodiment, the case of using a current collector made of iron-containing aluminium as a positive electrode current collector in order to further reduce a decrease in the battery capacity is described as a specific example. However, the present disclosure is not limited to this case. Alternatively, a current collector made of high-purity aluminium may be used as a positive electrode current collector, for example.

Moreover, in this embodiment, the case of using PVDF7300 (i.e., copolymer containing only VDF and having a polymerization degree of one million) as a binder is described as a specific example. However, the present disclosure is not limited to this case. It is sufficient to use copolymer containing VDF and having a polymerization degree of 750,000 or more.

The positive electrodes 4 and 20, the negative electrodes 5, the separators 6, and the nonaqueous electrolytes of the nonaqueous electrolyte secondary batteries of the first and second embodiments will be described in detail hereinafter.

First, the positive electrode will be described.

-Positive Electrode-

The positive electrode current collector 4A, 20A has a porous or non-porous structure. The thickness of the positive electrode current collector 4A, 20A is not specifically limited, but is preferably in the range from 1 $\mu$m to 500 $\mu$m, both inclusive, and more preferably in the range from 10 $\mu$m to 20 $\mu$m, both inclusive. In this manner, the thickness of the positive electrode current collector 4A, 20A is set in the range described above, thus making it possible to reduce the weight of the positive electrode 4, 20 while maintaining the strength of the positive electrode 4, 20.

The positive electrode active material and the conductive agent contained in each of the positive electrode material mixture layer 4B employing a binder made of VDF-HFP copolymer or VDF-HFP-TFE copolymer and the positive electrode material mixture layer 20B employing a binder made of PVDF7300 will now be described in order.

<Positive Electrode Active Material>

Examples of the positive electrode active material include $LiCoO_2$, $LiNiO_2$, $LiMnO_2$, $LiCoNiO_2$, $LiCoMO_z$, $LiNiMO_z$, $LiMn_2O_4$, $LiMnMO_4$, $LiMePO_4$, and $Li_2MePO_4F$ (where M is at least one of Na, Mg, Sc, Y, Mn, Fe, Co, Ni, Cu, Zn, Al, Cr, Pb, Sb, and B). In these lithium-containing compounds, an element may be partially substituted with an element of a different type. In addition, the positive electrode active material may be a positive electrode active material subjected to a surface process using a metal oxide, a lithium oxide, or a conductive agent, for example. Examples of this surface process include hydrophobization.

<Conductive Agent>

Examples of the conductive agent include graphites such as natural graphite and artificial graphite, carbon blacks such as acetylene black (AB), Ketjen black, channel black, furnace black, lamp black, and thermal black, conductive fibers such as carbon fiber and metal fiber, metal powders such as carbon fluoride and aluminium, conductive whiskers such as zinc oxide and potassium titanate, conductive metal oxides such as titanium oxide, and organic conductive materials such as a phenylene derivative.

Then, the negative electrode is described in detail.

-Negative Electrode-

The negative electrode current collector 5A has a porous or non-porous structure, and is made of, for example, stainless steel, nickel, or copper. The thickness of the negative electrode current collector 5A is not specifically limited, but is preferably in the range from 1 $\mu$m to 500 $\mu$m, both inclusive, and more preferably in the range from 10 $\mu$m to 20 $\mu$m, both inclusive. In this manner, the thickness of the negative electrode current collector 5A is set in the range described above, thus making it possible to reduce the weight of the negative electrode 5 while maintaining the strength of the negative electrode 5.

The negative electrode active material contained in the negative electrode material mixture layer 5B will now be described.

<Negative Electrode Active Material>

Examples of the negative electrode active material include metal, metal fiber, a carbon material, oxide, nitride, a silicon compound, a tin compound, and various alloys. Examples of the carbon material include various natural graphites, coke, partially-graphitized carbon, carbon fiber, spherical carbon, various artificial graphites, and amorphous carbon.

Since simple substances such as silicon (Si) and tin (Sn), silicon compounds, and tin compounds have high capacitance densities, it is preferable to use silicon, tin, a silicon compound, or a tin compound, for example, as the negative electrode active material. Examples of the silicon compound include $SiO_x$ (where $0.05 < x < 1.95$) and a silicon alloy and a silicon solid solution obtained by substituting part of Si forming $SiO_x$ with at least one of the elements selected from the group consisting of B, Mg, Ni, Ti, Mo, Co, Ca, Cr, Cu, Fe, Mn, Nb, Ta, V, W, Zn, C, N, and Sn. Example of the tin compound include $Ni_2Sn_4$, $Mg_2Sn$, $SnO_x$ (where $0 < x < 2$), $SnO_2$, and $SnSiO_3$. One of the examples of the negative electrode active material may be used solely or two or more of them may be used in combination.

Then, the separator is described in detail.

-Separator-

Examples of the separator 6 include a microporous thin film, woven fabric, and nonwoven fabric each of which has a high ion permeability, a predetermined mechanical strength, and a predetermined insulation property. In particular, polyolefin such as polypropylene or polyethylene is preferably used as the separator 6. Since polyolefin has high durability and a shutdown function, the safety of the lithium ion secondary battery can be enhanced. The thickness of the separator 6 is generally in the range from 10 $\mu$m to 300 $\mu$m, both inclusive, and preferably in the range from 10 $\mu$m to 40 $\mu$m, both inclusive. The thickness of the separator 6 is more preferably in the range from 15 $\mu$m to 30 $\mu$m, both inclusive, and much more preferably in the range from 10 $\mu$m to 25 $\mu$m, both inclusive. In the case of using a microporous thin film as the separator 6, this microporous thin film may be a single-layer film made of a material of one type, or may be a composite film or a multilayer film made of one or more types of materials. The porosity of the separator 6 is preferably in the range from 30% to 70%, both inclusive, and more preferably in the range from 35% to 60%, both inclusive. The porosity herein is the volume ratio of pores to the total volume of the separator.

Then, the nonaqueous electrolyte is described in detail.

Nonaqueous Electrolyte-

The nonaqueous electrolyte contains an electrolyte and a nonaqueous solvent in which this electrolyte is dissolved.

As the nonaqueous solvent, a known nonaqueous solvent may be used. The type of this nonaqueous solvent is not specifically limited, and examples of the nonaqueous solvent include cyclic carbonic ester, chain carbonic ester, and cyclic carboxylate ester. Cyclic carbonic ester may be propylene carbonate (PC) or ethylene carbonate (EC), for example. Chain carbonic ester may be diethyl carbonate (DEC), ethylmethyl carbonate (EMC), or dimethyl carbonate (DMC), for example. Cyclic carboxylate ester may be gamma-butyrolactone (GBL) or gamma-valerolactone (GVL). One of the examples of the nonaqueous solvent may be used solely or two or more of them may be used in combination.

Examples of the electrolyte include $LiClO_4$, $LiBF_4$, $LiPF_6$, $LiAlCl_4$, $LiSbF_6$, $LiSCN$, $LiCF_3SO_3$, $LiCF_3CO_2$, $LiAsF_6$, $LiB_{10}Cl_{10}$, lower aliphatic lithium carboxylate, $LiCl$, $LiBr$, $LiI$, chloroborane lithium, borates, and imidates. Examples of the borates include bis(1,2-benzene diorate(2-)-O,O')lithium borate, bis(2,3-naphthalene diorate(2-)-O,O')lithium borate, bis(2,2'-biphenyl diorate(2-)-O,O')lithium borate, and bis(5-fluoro-2-orate-1-benzenesulfonic acid-O,O')lithium borate. Examples of the imidates include lithium bistrifluoromethanesulfonimide ($(CF_3SO_2)_2NLi$), lithium trifluoromethanesulfonate nonafluorobutanesulfonimide ($LiN(CF_3SO_2)(C_4F_9SO_2)$), and lithium bispentafluoroethanesulfonimide ($(C_2F_5SO_2)_2NLi$). One of these electrolytes may be used solely or two or more of them may be used in combination.

The amount of the electrolyte dissolved in the nonaqueous solvent is preferably in the range from 0.5 mol/m$^3$ to 2 mol/m$^3$, both inclusive.

The nonaqueous electrolyte may contain an additive which is decomposed on the negative electrode and forms thereon a coating having high lithium ion conductivity to enhance the charge/discharge efficiency of the battery, for example, in addition to the electrolyte and the nonaqueous solvent. Examples of the additive having such a function include vinylene carbonate (VC), 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate (VEC), and divinyl ethylene carbonate. One of the additives may be used solely or two or more of them may be used in combination. Among the additives, at least one selected from the group consisting of vinylene carbonate, vinyl ethylene carbonate, and divinyl ethylene carbonate is preferable. In the above-listed additives, hydrogen atoms may be partially substituted with fluorine atoms.

The nonaqueous electrolyte may further contain, for example, a known benzene derivative which is decomposed during overcharge and forms a coating on the electrode to inactivate the battery, in addition to the electrolyte and the nonaqueous solvent. The benzene derivative having such a function preferably includes a phenyl group and a cyclic compound group adjacent to the phenyl group. Examples of the benzene derivative include cyclohexylbenzene, biphenyl, and diphenyl ether. Examples of the cyclic compound group included in the benzene derivative include a phenyl group, a cyclic ether group, a cyclic ester group, a cycloalkyl group, and a phenoxy group. One of the benzene derivatives may be used solely or two or more of them may be used in combination. However, the content of the benzene derivative in the nonaqueous solvent is preferably 10 volume percent (vol. %) or less of the total volume of the nonaqueous solvent.

Examples 1 and 2 and Comparative Examples will be described hereinafter in detail.

<Example 1>

(Battery 1)

(Formation of Positive Electrode)

First, LiNi0.82Co$_{0.15}$Al$_{0.03}$O$_2$ having an average particle diameter of 10 μm was prepared.

Next, 4.5 vol. % of acetylene black as a conductive agent with respect to 100.0 vol. % of a positive electrode active material, a solution in which 4.7 vol. % of VDF-HFP copolymer (specifically, copolymer obtained by copolymerizing 95 mol percent (mol. %) of VDF and 5 mol. % of HFP) with respect to 100.0 vol. % of a positive electrode active material was dissolved as a binder in a N-methyl pyrrolidone (NMP) solvent, and LiNi$_{0.82}$Co$_{0.15}$Al$_{0.03}$O$_2$ as a positive electrode active material were mixed, thereby obtaining positive electrode material mixture slurry. This positive electrode material mixture slurry was applied onto both surfaces of aluminium foil (specifically, aluminium alloy foil, BESPA FS13 (A8021H-H18)) containing 1.29 weight percent (wt. %) of iron, having a softening temperature of 220°C, and produced by SUMIKEI ALUMINUM FOIL, Co., Ltd.) made of iron-containing aluminium and having a thickness of 15 μm as a positive electrode current collector, and was dried. Thereafter, the resultant positive electrode current collector whose both surfaces were coated with the dried positive electrode material mixture slurry was rolled, thereby obtaining a positive electrode plate in the shape of a plate having a thickness of 0.157 mm. This positive electrode plate was then subjected to heat treatment for 60 seconds at 250°C by using hot air subjected to low humidity treatment at -30°C. Subsequently, the positive electrode plate was cut to have a width of 57 mm and a length of 564 mm, thereby obtaining a positive electrode having a thickness of 0.157 mm, a width of 57 mm, and a length of 564 mm.

(Formation of Negative Electrode)

First, flake artificial graphite was ground and classified to have an average particle diameter of about 20 μm.

Then, 3 parts by weight (pbw) of styrene butadiene rubber as a binder and 100 pbw of a solution containing 1 wt. % of carboxymethyl cellulose were added to 100 pbw of flake artificial graphite as a negative electrode active material, and these materials were mixed, thereby obtaining negative electrode material mixture slurry. This negative electrode material mixture slurry was then applied onto both surfaces of copper foil with a thickness of 8 μm as a negative electrode current collector, and was dried. Thereafter, the resultant negative electrode current collector whose both surfaces were coated with the dried negative electrode material mixture slurry was rolled, thereby obtaining a negative electrode plate in the shape of a plate having a thickness of 0.156 mm. This negative electrode plate was subjected to heat treatment in a nitrogen atmosphere at 190°C for 8 hours by using hot air. The negative electrode plate was then cut to have a width of 58.5 mm and a length of 750 mm, thereby obtaining a negative electrode with a thickness of 0.156 mm, a width of 58.5 mm, and a length of 750 mm. This negative electrode had a tensile extension percentage of 5% (i.e., 3% or more).

(Preparation of Nonaqueous Electrolyte)

To a solvent mixture of ethylene carbonate and dimethyl carbonate in the volume ratio of 1 : 3 as a nonaqueous solvent, 5 wt. % of vinylene carbonate was added as an additive for increasing the charge/discharge efficiency of the battery, and $LiPF_6$ as an electrolyte was dissolved in an amount of 1.4 mol/m$^3$ with respect to the nonaqueous solvent, thereby obtaining a nonaqueous electrolyte solution.

(Formation of Cylindrical Battery)

First, a positive electrode lead made of aluminium was attached to the positive electrode current collector, and a negative electrode lead made of nickel was attached to the negative electrode current collector. Then, the positive electrode and the negative electrode were wound with a polyethylene separator (specifically, a separator having a tensile extension percentage of 8% (i.e., 3% or more)) interposed therebetween, thereby forming an electrode group. Thereafter, an upper insulating plate was placed at the upper end of the electrode group, and a lower insulating plate was placed at the bottom end of the electrode group. Subsequently, the negative electrode lead was welded to a battery case, and the positive electrode lead was welded to a sealing plate including a safety valve operated with inner pressure, thereby housing the electrode group in the battery case. Then, a nonaqueous electrolyte was poured in the battery case under a reduced pressure. Lastly, an opening end of the battery case was crimped to the sealing plate with a gasket interposed therebetween, thereby fabricating a battery.

The battery fabricated in the above manner will be hereinafter referred to as a battery 1.

(Battery 2)

A battery 2 was fabricated in the same manner as the battery 1 except that aluminium foil made of high-purity aluminium with a thickness of 15 μm (specifically, A1085-H18 containing no iron, having a softening temperature of 250°C, and produced by SUMIKEI ALUMINUM FOIL, Co., Ltd) was used as the positive electrode current collector and that heat treatment was performed on the positive electrode plate at 250°C for 10 hours in (Formation of Positive Electrode).

(Battery 3)

A battery 3 was fabricated in the same manner as the battery 1 except that VDF-HFP-TFE copolymer (specifically, copolymer obtained by copolymerizing 90 mol. % of VDF, 5 mol. % of HFP, and 5 mol. % of TFE) was used as a binder in (Formation of Positive Electrode).

<Example 2>

(Battery 4)

A battery 4 was fabricated in the same manner as the battery 1 except that PVDF7300 (i.e., copolymer obtained by copolymerization of only VDF having a polymerization degree of one million) was used as a binder in (Formation of Positive Electrode).

<Comparative Example>

(Battery 5)

A battery 5 was fabricated in the same manner as the battery 1 except that PVDF7200 (i.e., copolymer obtained by copolymerization of only VDF having a polymerization degree of 630,000) was used as a binder in (Formation of Positive Electrode).

(Battery 6)

A battery 6 was fabricated in the same manner as the battery 1 except that PVDF7200 was used as a binder and A1085-H18 having a thickness of 15 $\mu$m and produced by SUMIKEI ALUMINUM FOIL, Co., Ltd (hereinafter referred to as "A1085") was used as a positive electrode current collector and that heat treatment was performed on the positive electrode plate at 250°C for 10 hours in (Formation of Positive Electrode).

(Battery 7)

A battery 7 was fabricated in the same manner as the battery 1 except that A1085 with a thickness of 15 $\mu$m was used as a positive electrode current collector in (Formation of Positive Electrode).

For each of the batteries 1-7, the tensile extension percentage of the positive electrode, the dynamic hardness of the positive electrode current collector, the dynamic hardness of the positive electrode material mixture layer, and a gap in the stiffness test on the positive electrode were measured. The measurements were carried out in the following manner.

<Measurement of Tensile Extension Percentage of Positive Electrode>

First, each of the batteries 1-7 was charged to a voltage of 4.25 V at a constant current of 1.45 A, and was charged to a current of 50 mA at a constant voltage. Then, each of the resultant batteries 1-7 was disassembled, and a positive electrode was taken out. This positive electrode was then cut to have a width of 15 mm and an effective length of 20 mm, thereby forming a sample positive electrode. Thereafter, one end of the sample positive electrode was fixed, and the other end of the sample positive electrode was extended along the longitudinal direction thereof at a speed of 20 mm/min. At this time, the length of the sample positive electrode immediately before breakage was measured. Using the obtained length and the length (i.e., 20 mm) before the extension of the sample positive electrode, the tensile extension percentage of the positive electrode was calculated. The tensile extension percentage [%] of the positive electrode of each of the batteries 1-7 is shown in Table 1 below.

<Measurement of Dynamic Hardness>

First, each of the batteries 1-7 was charged to a voltage of 4.25 V at a constant current of 1.45 A, and was charged to a current of 50 mA at a constant voltage. Then, each of the resultant batteries 1-7 was disassembled, and a positive electrode was taken out. For this positive electrode, the dynamic hardness of the positive electrode current collector and the dynamic hardness of the positive electrode material mixture layer were measured with Shimadzu Dynamic Ultra Micro Hardness Tester DUH-W201. The "dynamic hardness of the current collector" and the "dynamic hardness of the positive electrode material mixture layer" of each of the batteries 1-7 are shown in Table 1.

<Measurement of Gap in Stiffness Test of Positive Electrode>

First, each of the batteries 1-7 was charged to a voltage of 4.25 V at a constant current of 1.45 A, and was charged to a current of 50 mA at a constant voltage. Then, each of the resultant batteries 1-7 was disassembled, and a positive electrode was taken out. This positive electrode was cut to have a width of 10 mm and a length of 100 mm. The resultant positive electrode was rolled up to form a single complete circle with both ends thereof placed on top of each other, thereby forming a sample positive electrode. The overlapping portion of the sample positive electrode was fixed by a fixing jig placed on a lower flat plate. Then, the sample positive electrode in the shape of a complete circle in cross section with an outer circumference of 100 mm was sandwiched between the lower flat plate and an upper flat plate placed above the lower flat plate. Thereafter, the upper flat plate was moved downward at a speed of 10 mm/min, thereby pressing the circumferential surface of the sample positive electrode. At this time, stress on the sample positive electrode was measured, thereby measuring a gap for the sample positive electrode at the time when the inflection point was detected. In this measurement, the gap [mm] in the stiffness test of the positive electrode in each of the batteries 1-7 is shown in Table 1.

The battery capacity was measured for each of the batteries 1-7 in the following manner.

<Measurement of Battery Capacity >

Each of the batteries 1-7 was charged to a voltage of 4.2 V at a constant current of 1.4 A in an atmosphere of 25°C, and was charged to a current of 50 mA at a constant voltage of 4.2 V. Then, the battery was discharged to a voltage of 2.5 V at a constant current of 0.56 A, and the capacity of the battery at this time was measured. The "battery capacity [Ah]" of each of the batteries 1-7 is shown in Table 1.

For each of the batteries 1-7, a crush test, a foreign material entering test, and an electrode plate breakage evaluation were conducted in the following manner.

<Crush Test>

First, each of the batteries 1-7 was charged to a voltage of 4.25 V at a constant current of 1.45 A, and was charged to a current of 50 mA at a constant voltage. Then, a round bar with a diameter of 6 mm was brought into contact with each of the batteries 1-7 at a battery temperature of 30°C, and was moved in the depth direction of the battery at a speed of 0.1 mm/sec. In this manner, each of the batteries 1-7 was crushed. The amount of deformation along the depth of the battery at the time of occurrence of short-circuit in the battery was measured with a displacement sensor. Results of the crush test (i.e., the "short-circuit depth [mm]") on each of the batteries 1-7 are shown in Table 1.

<Foreign Material Entering Test>

First, 20 cells of each of the batteries 1-7 were prepared. Then, each of the batteries 1-7 was charged to a voltage of 4.25 V at a constant current of 1.45 A, and was charged to a current of 50 mA at a constant voltage. Then, the electrode group was taken out from the battery case. Subsequently, a nickel plate 21 having a thickness of 0.1 mm (see, a in FIG. 6(a)), a length of 2 mm (see, b in FIG. 6(a)), and a width of 0.2 mm (see, c in FIG. 6(a)) was bent at an arbitrary point on the length of 2 mm, thereby obtaining a nickel plate 22 in the shape of L in cross section having a thickness of 0.1 mm (see, A in FIG. 6(b)) and a height of 0.2 mm (see, C in FIG. 6(b)). This nickel plate 22 was interposed between the positive electrode and the separator at respective portions thereof closest to the outermost circumference of the electrode group with the height direction of the nickel plate 22 oriented perpendicularly to the surfaces of the positive electrode and the separator (i.e., the thickness direction of the nickel plate 22 being in parallel with the surfaces of the positive electrode and the separator). This electrode group in which the nickel plate 22 was interposed between the positive electrode and the separator was then placed in the battery case again. Subsequently, each of the batteries 1-7 was pressed at a pressure of 700 N/cm$^2$. Then, out of the 20 cells, the number of cells showing occurrence of short-circuit (i.e., the number of short-circuited cells per 20 cells) was counted for each of the batteries 1-7. Results (i.e., the "number of short-circuits") of the foreign material entering test on each of the batteries 1-7 are shown in Table 1.

<Electrode Plate Breakage Evaluation>

Using a winding core with a diameter of 3 mm, the positive electrode and the negative electrode were wound with the separator interposed therebetween with a tension of 1.2 kg applied, thereby preparing 50 cells of each of the batteries 1-7. In each of the batteries 1-7, the number of broken positive electrodes among the 50 cells (i.e., the number of short-circuited cells broken positive electrodes per 50 cells) was counted. Results (i.e., the "number of breakages") of the electrode plate breakage evaluation on each of the batteries 1-7 is shown in Table 1.
[Table 1]

| | Binder | Current Collector | Heat Treatment | Tensile Extension Percentage [%] | Dynamic Hardness of Current Collector | Dynamic Hardness of Material Mixture Layer | Gap [mm] | Battery Capacity [Ah] | Short-circuit Depth [mm] | Number of Short-circuits | Number of Breakages |
|---|---|---|---|---|---|---|---|---|---|---|---|
| Battery 1 | VDF-HFP | A8021 | 250°C 60 sec. | 6 | 56 | 5 | 1.5 | 2.90 | 10 | 0/20 | 0/50 |
| Battery 2 | VDF-HFP | A1085 | 250°C 10h h | 6 | 56 | 4 | 1.5 | 2.80 | 10 | 0/20 | 0/50 |
| Battery 3 | VDF-HFP-TFE | A8021 | 250°C 60 sec. | 6 | 56 | 5 | 1.5 | 2.92 | 10 | 0/20 | 0/50 |
| Battery 4 | PVDF7300 | A8021 | 250°C 60 sec. | 6 | 56 | 5 | 1.5 | 2.92 | 10 | 0/20 | 0/50 |
| Battery 5 | PVDF7200 | A8021 | 250°C 60 sec. | 6 | 56 | 5 | 5 | 2.85 | 10 | 0/20 | 0/50 |
| Battery 6 | PVDF7200 | A1085 | 250°C 10h h | 6 | 56 | 4 | 5 | 2.70 | 10 | 0/20 | 0/50 |
| Battery 7 | VDF-HFP | A1085 | 250°C 60 sec. | 1.5 | 92 | 6 | 5 | 2.94 | 5 | 20/20 | 50/50 |

The batteries 1-4 of Examples 1 and 2 will now be compared with the batteries 5-7 of Comparative Example based on Table 1.

As shown in Table 1, the batteries 1-6 in each of which the tensile extension percentage of the positive electrode is increased to 3% or more have the advantages of reducing short-circuit caused by crush, short-circuit caused by entering of a foreign material, and reducing breakage of the positive electrode in forming the electrode group. On the other hand, the battery 7 in which the tensile extension percentage of the positive electrode is less than 3% does not have the advantages of reducing short-circuit caused by crush, short-circuit caused by entering of a foreign material, and reducing breakage of the positive electrode in forming the electrode group.

The batteries 1-3 of Example 1 will now be compared with the batteries 5-7 of Comparative Example based on Table 1.

As shown in Table 1, among the batteries 1 and 5 subjected to heat treatment at 250°C for 60 seconds using aluminium alloy foil, BESPA FS13 (A8021H-H18) produced by SUMIKEI ALUMINUM FOIL, Co., Ltd. (hereinafter referred to as "A8021") as a positive electrode current collector, the battery 1 using VDF-HFP copolymer as a binder can reduce a decrease in the battery capacity, as compared to the battery 5 using PVDF7200 as a binder.

In the same manner, as shown in Table 1, between the batteries 2 and 6 subjected to heat treatment at 250°C for 10 hours using A1085 as a positive electrode current collector, the battery 2 using VDF-HFP copolymer as a binder can reduce a decrease in the battery capacity, as compared to the battery 6 using PVDF7200 as a binder.

As shown in Table 1, between the batteries 1 and 3 subjected to heat treatment at 250°C for 60 seconds using A8021 as a positive electrode current collector, the battery 3 using VDF-HFP-TFE copolymer as a binder can reduce a decrease in the battery capacity, as compared to the battery 1 using VDF-HFP copolymer as a binder.

As shown in Table 1, between the batteries 1 and 2 using VDF-HFP as a binder, the battery 1 using A8021 as a positive electrode current collector can reduce the period of the heat treatment to reduce a decrease in the battery capacity, as compared to the battery 2 using A1085 as a positive electrode current collector.

The battery 4 of Example 2 will now be compared with the battery 5 of Comparative Example based on Table 1.

As shown in Table 1, between the batteries 4 and 5 subjected to heat treatment at 250°C for 60 seconds using A8021 as a positive electrode current collector, the battery 4 using PVDF7300 as a binder can reduce a decrease in the battery capacity, as compared to the battery 5 using PVDF7200 as a binder.

As described above, the use of a binder made of VDF-HFP copolymer or VDF-HFP-TFE copolymer or a binder made of PVDF7300 can minimize a decrease in the battery capacity, and can increase the tensile extension percentage of the positive electrode to 3% or more, thereby reducing short-circuit caused by crush. In addition, the dynamic hardness of the positive electrode current collector is set at 70 or less and the dynamic hardness of the positive electrode material mixture layer is set at 5 or less, thereby reducing short-circuit caused by entering of a foreign material. Further, the gap in the stiffness test of the positive electrode is set at 3 mm or less, thereby reducing breakage of the positive electrode in forming the electrode group.

INDUSTRIAL APPLICABILITY

As described above, the present disclosure may be useful for devices such as household power supplies with, for example, higher energy density, power supplies to be installed in vehicles, and power supplies for large tools.

DESCRIPTION OF REFERENCE CHARACTERS

| | |
|---|---|
| 1 | battery case |
| 2 | sealing plate |
| 3 | gasket |
| 4 | positive electrode |
| 4a | positive electrode lead |
| 5 | negative electrode |
| 5a | negative electrode lead |
| 6 | separator (porous insulating layer) |
| 7a | upper insulating plate |
| 7b | lower insulating plate |
| 8 | electrode group |
| 4A | positive electrode current collector |
| 4B | positive electrode material mixture layer |
| 5A | negative electrode current collector |

| 5B | negative electrode material mixture layer |
| 9 | sample positive electrode |
| 10a | upper chuck |
| 10b | lower chuck |
| 11 | base |
| 12 | positive electrode of the invention |
| 12A | positive electrode current collector |
| 12B | positive electrode material mixture layer |
| 13 | crack |
| 14 | conventional positive electrode |
| 14A | positive electrode current collector |
| 14B | positive electrode material mixture layer |
| 15 | crack |
| 16 | sample positive electrode |
| 16a | overlapping portion |
| 17a | upper flat plate |
| 17b | lower flat plate |
| 18 | gap |
| 19a, 19b | inflection point |
| 20 | positive electrode |
| 20A | positive electrode current collector |
| 20B | positive electrode material mixture layer |
| 21 | nickel plate |
| 22 | nickel plate |
| a | thickness |
| b | length |
| c | width |
| A | thickness |
| C | height |

**Claims**

1.  A nonaqueous electrolyte secondary battery, comprising:

    a positive electrode including a positive electrode current collector and a positive electrode material mixture layer containing a positive electrode active material and a binder and provided on the positive electrode current collector;
    a negative electrode;
    a porous insulating layer interposed between the positive electrode and the negative electrode; and
    a nonaqueous electrolyte, wherein
    the positive electrode has a tensile extension percentage of 3.0% or more, and
    the binder is made of copolymer containing vinylidene fluoride and hexafluoropropylene.

2.  The nonaqueous electrolyte secondary battery of claim 1, wherein the binder is made of copolymer containing vinylidene fluoride, hexafluoropropylene, and tetrafluoroethylene.

3.  A nonaqueous electrolyte secondary battery, comprising:

    a positive electrode including a positive electrode current collector and a positive electrode material mixture layer containing a positive electrode active material and a binder and provided on the positive electrode current collector;
    a negative electrode;
    a porous insulating layer interposed between the positive electrode and the negative electrode; and
    a nonaqueous electrolyte, wherein
    the positive electrode has a tensile extension percentage of 3.0% or more,
    the binder is made of copolymer containing vinylidene fluoride, and
    the binder has a polymerization degree of 750,000 or more.

4. The nonaqueous electrolyte secondary battery of claim 1 or 3, wherein the tensile extension percentage of the positive electrode is calculated from a length of a sample positive electrode formed by using the positive electrode and having a width of 15 mm and a length of 20 mm immediately before the sample positive electrode is broken with one end of the sample positive electrode fixed and the other end of the sample positive electrode extended along a longitudinal direction thereof at a speed of 20 mm/min, and from a length of the sample positive electrode before the sample positive electrode is extended.

5. The nonaqueous electrolyte secondary battery of claim 1 or 3, wherein
the positive electrode current collector has a dynamic hardness of 70 or less, and the positive electrode material mixture layer has a dynamic hardness of 5 or less.

6. The nonaqueous electrolyte secondary battery of claim 1 or 3, wherein measurement of stress on a sample positive electrode whose circumferential surface is being pressed at 10 mm/min shows that no inflection point of stress arises until a gap corresponding to the sample positive electrode crushed by the pressing reaches 3 mm, inclusive, and the sample positive electrode is formed by using the positive electrode, has a circumference of 100 mm, and is rolled up in the shape of a single complete circle.

7. The nonaqueous electrolyte secondary battery of claim 1 or 3, wherein the positive electrode current collector is made of aluminium containing iron.

8. The nonaqueous electrolyte secondary battery of claim 7, wherein an amount of iron contained in the positive electrode current collector is in the range from 1.20 weight percent (wt. %) to 1.70 wt. %, both inclusive.

9. The nonaqueous electrolyte secondary battery of claim 1 or 3, wherein
the negative electrode has a tensile extension percentage of 3.0% or more, and
the porous insulating layer has a tensile extension percentage of 3.0% or more.

10. A method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte, the method comprising the steps of:

(a) preparing the positive electrode;
(b) preparing the negative electrode; and
(c) either winding or stacking the positive electrode and the negative electrode with the porous insulating layer interposed therebetween after steps (a) and (b), wherein

step (a) includes the steps of

(a1) coating the positive electrode current collector with positive electrode material mixture slurry containing the positive electrode active material and the binder, and drying the slurry,
(a2) rolling the positive electrode current collector coated with the dried positive electrode material mixture slurry, thereby forming the positive electrode having a predetermined thickness, and
(a3) performing heat treatment on the positive electrode coated with the dried positive electrode material mixture slurry at a predetermined temperature after step (a2),

the binder is made of copolymer containing vinylidene fluoride and hexafluoropropylene, and
the predetermined temperature is higher than or equal to a softening temperature of the positive electrode current collector and lower than a decomposition temperature of the binder.

11. The method of claim 10, wherein the binder is made of copolymer containing vinylidene fluoride, hexafluoropropylene, and tetrafluoroethylene.

12. A method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte, the method comprising the steps of:

(a) preparing the positive electrode;
(b) preparing the negative electrode; and
(c) either winding or stacking the positive electrode and the negative electrode with the porous insulating layer interposed therebetween after steps (a) and (b), wherein

step (a) includes the steps of:

(a1) coating the positive electrode current collector with positive electrode material mixture slurry containing the positive electrode active material and the binder, and drying the slurry;
(a2) rolling the positive electrode current collector coated with the dried positive electrode material mixture slurry, thereby forming the positive electrode having a predetermined thickness; and
(a3) performing heat treatment on the positive electrode coated with the dried positive electrode material mixture slurry at a predetermined temperature after step (a2),

the binder is made of copolymer containing vinylidene fluoride,
the binder has a polymerization degree of 750,000 or more, and
the predetermined temperature is higher than or equal to a softening temperature of the positive electrode current collector and lower than a decomposition temperature of the binder.

13. The method of claim 10 or 12, wherein the positive electrode current collector is made of aluminium containing iron.

# FIG. 1

FIG. 2

# FIG. 3

(a)

20mm/min

10a

9

10b

11

(b)

13

12 { 12A
     12B

(c)

15

14 { 14A
     14B

# FIG. 4

(a)

10mm/min ↓

~17a

~16

~18

~17b

16a

(b)

19b

19a

Intensity of Stress

3mm   0mm   Gap

Movement of
Upper Flat Plate

# FIG. 5

20A ⎫
       ⎬ 20
20B ⎭

6

5A ⎫
     ⎬ 5
5B ⎭

# FIG. 6

(a)

(b)

## INTERNATIONAL SEARCH REPORT

| | International application No. |
|---|---|
| | PCT/JP2009/003341 |

A. CLASSIFICATION OF SUBJECT MATTER
*H01M4/02*(2006.01)i, *H01M4/62*(2006.01)i, *H01M4/66*(2006.01)i, *H01M10/40*
(2006.01)i

According to International Patent Classification (IPC) or to both national classification and IPC

B. FIELDS SEARCHED

Minimum documentation searched (classification system followed by classification symbols)
H01M4/00-/62, H01M10/40

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-273259 A  (Sanyo Electric Co., Ltd.), 18 October, 2007 (18.10.07), Claims (Family: none) | 1-13 |
| A | JP 2006-134762 A  (Sony Corp.), 25 May, 2006 (25.05.06), Claims; Par. Nos. [0022], [0023] (Family: none) | 1-13 |
| A | JP 07-006752 A  (Toray Industries, Inc.), 10 January, 1995 (10.01.95), Claims; Par. No. [0012] (Family: none) | 1-13 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 August, 2009 (11.08.09) | 25 August, 2009 (25.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

<table>
<tr><td colspan="2" align="center">**INTERNATIONAL SEARCH REPORT**</td><td>International application No.<br>PCT/JP2009/003341</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-186704 A  (Matsushita Electric Industrial Co., Ltd.), 14 August, 2008 (14.08.08), Claims (Family: none) | 1-13 |
| A | JP 2005-174833 A  (Sanyo Electric Co., Ltd.), 30 June, 2005 (30.06.05), Claims (Family: none) | 1-13 |
| A | JP 05-182692 A  (Sanyo Electric Co., Ltd.), 23 July, 1993 (23.07.93), Claims (Family: none) | 1-13 |
| P,X | JP 2009-064770 A  (Panasonic Corp.), 26 March, 2009 (26.03.09), Claims; Par. No. [0079] & WO 2009/019861 A1 | 1,2,4-11,13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05182692 B